Europäisches Patentamt

European Patent Office

Office européen des brevets

(11) Publication number: **0 400 655**
**A1**

## EUROPEAN PATENT APPLICATION

(21) Application number: **90110382.0**

(22) Date of filing: **31.05.90**

(51) Int. Cl.⁵: **B32B 18/00**

(30) Priority: **01.06.89 JP 139892/89**
**30.03.90 JP 85960/90**

(43) Date of publication of application:
**05.12.90 Bulletin 90/49**

(84) Designated Contracting States:
**DE GB**

(71) Applicant: **SEIKO INSTRUMENTS INC.**
**31-1, Kameido 6-chome Koto-ku**
**Tokyo 136(JP)**

(72) Inventor: **Nishikawa, Akira**
**c/o Seiko Instruments Inc., 31-1, Kameido**
**6-chome**
**Koto-ku, Tokyo(JP)**

(74) Representative: **Fleuchaus, Leo, Dipl.-Ing. et al**
**Melchiorstrasse 42**
**D-8000 München 71(DE)**

(54) **Optical window piece.**

(57) The optical window piece is composed of a diamond film (2) reinforced by a lattice or network pattern of carbon fiber (4) on either of the front and/or rear faces of the film (2). The carbon fiber (4) is quite fine, and has good transmittance for X-ray and high tension strength. The thin and fragile diamond film can be reinforced or supported by the carbon fiber layer on both faces of the film to thereby enable scale-up of the window area, cost reduction and improvement of pressure resistance while maintaining good inherent transmittance of the diamond film for light and X-ray.

# F I G. 1

EP 0 400 655 A1

## OPTICAL WINDOW PIECE

### Background of the Invention

The present invention relates to a window piece used in a vacuum or pressurized chamber system which treats ultraviolet ray, visible ray, ultrared ray or X-ray.

As well known, diamond has an excellent optical transmittance for incidence light in the wide range from about 0.3µm of wavelengths of ultraviolet ray to about 25µm of far ultrared ray, and is composed of carbon atoms having a relatively small atomic number of effective to transmit X-ray. Further, the diamond has thermal resistance of about 1200°C in vacuum and about 600°C in atmosphere, suitable for use as an optical window member.

In the conventional technology for producing an optical window plate composed of diamond, source material is selected from natural or synthesized diamond crystal of about several mm order of size, which is mechnically finished by polishing and grinding to form a thin plate.

However, in such case, a diamond crystal of relatively large size is quite rare and significantly precious, hence it is quite difficult to manufacture a diamond window of large dimension more than, for example, 1cm of diameter. Further, diamond has the highest hardness among various materials, thereby causing drawback that cost is quite high for mechanical working of diamond.

### Summary of the Invention

In order to solve the above noted problems, an object of the present invention is to provide an optical window member composed of diamond, featuring low cost, great area dimension and good optical transmittance.

In order to achieve the object, according to the present invention, a diamond film synthesized by gas phase method is utilized for an optical window member. The window is composed of multi-layer structure comprised of a diamond film and carbon fiber of lattice or network construction or pattern disposed on either of front and rear surfaces of the diamond film to reinforce the same.

In the inventive optical window member, the diamond film or sheet is reinforced by lattice or network structure of the carbon fiber which has a high tension strength, effective to avoid curvature and undulation and effective to significantly improve mechanical strength to thereby prevent destruction. Commercially available carbon fiber has, for example, more or less 7µm of diameter and 300 - 500kg/mm² of tension strength.

Preferable, in the three-layer structure where the thin and fragile diamond film is reinforced on both of the front and rear surfaces thereof by lattice or network of the carbon fiber in sandwiching relation, the inventive window member can advantageously have high mechanical strength against pressure applied from either of the front and rear directions.

Further, the carbon fiber has preferrably an extremely small diameter in the order of several µm such that lattice or network of the carbon fiber substantially never block incident light and X-ray passing through the window. Moreover, the carbon fiber is comprised of carbon atoms which has advantageously good transmittance for X-ray.

The diamond film can be formed by various gas phase method such as thermal CVD method, plasma CVD method, photo-CVD method, ionization evaporation method and plasma jet method. Any of these methods can be used to achieve the same inventive effect so as to realize scale-up of the window area and manufacturing cost-down as compared to the conventional window member which is made by machining the diamond crystal.

### Brief Description of the Drawings

Fig. 1 is a perspective view of the inventive optical window member composed of diamond film;
Fig. 2 is a sectional view of the same window member;
Fig. 3 is a perspective view of another embodiment of the optical window member;

2

Fig. 4 is a sectional view of the Fig. 3 embodiment;

Figs. 5A - 5D are an illustrative diagram showing production steps of the Fig. 1 optical window member;

Figs. 6A - 6D are an illustrative diagram showing production steps of the Fig. 3 optical window member; and

Fig. 7 is a schematic diagram showing pressure resistant strength test apparatus for a window member.

Detailed Description of the Invention

Hereinafter, embodiments of the invention will be described in conjunction with the drawings.

EMBODIMENT 1

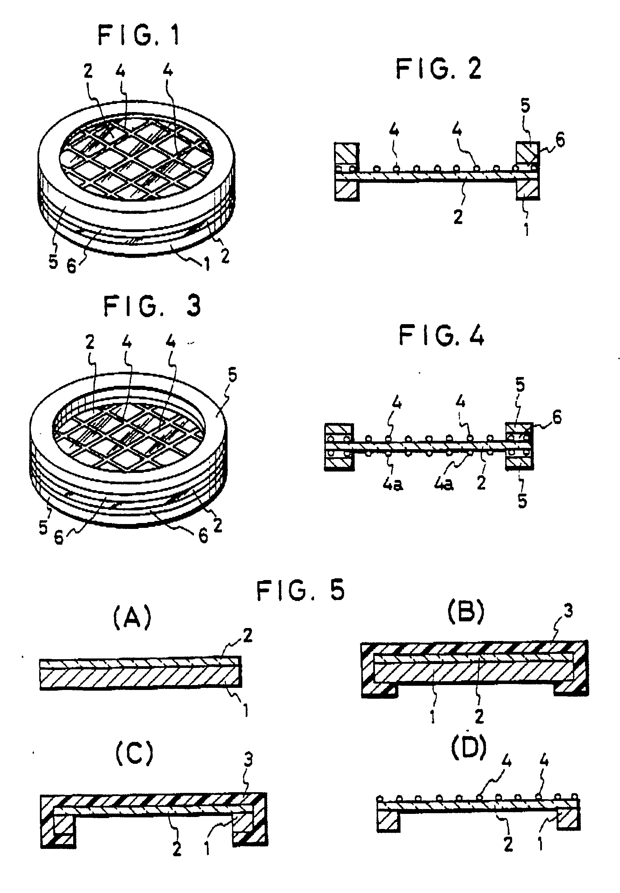

Figs. 5A - 5D are an illustrative diagram showing production steps of the inventive optical window member. Firstly, as shown in Fig. 5A, there is prepared a silicon substrate 1 having about 30mm of the diameter and about 200μm of thickness. A diamond film 2 is deposited at about 2μm of thickness on one surface of the substrate by microwave plasma CVD method according to the synthesis condition indicated by the following table 1.

TABLE 1

| source gas composition | $H_2$ - $CH_4$ |
| --- | --- |
| source gas flow ratio | $CH_4/H_2$ = 0.1 - 3.0vol % |
| gas pressure | 30 - 40 Torr |
| microwave frequency | 2.45 GHz |
| microwave power | 300 - 500W |

Next as shown in Fig. 5B, a photoresist 3 is coated on the entire surface of the substrate, and thereafter a central part of the silicon substrate is exposed by means of photolithographic technology. The exposed area has about 20mm f diameter.

In the step of Fig. 5C, the exposed part of silicon is removed by etching while being dipped into acid mixture solution of HF and $HNO_3$.

Then in the step of Fig. 5D, the photoresist is removed and the substrate is washed. Thereafter, a surface of the diamond film 2 is reinforced and supported by a mesh 4 of carbon fiber having about 7μm of diameter and about 2.5mm of mesh pitch.

Lastly, as shown in Fig. 2, a window frame 5 composed of stainless steel is mounted to the substrate by means of a metal solder 6 so as to fix the carbon fiber mesh 4 and the diamond film 2 to thereby complete the optical window member as shown in Fig. 1.

EMBODIMENT 2

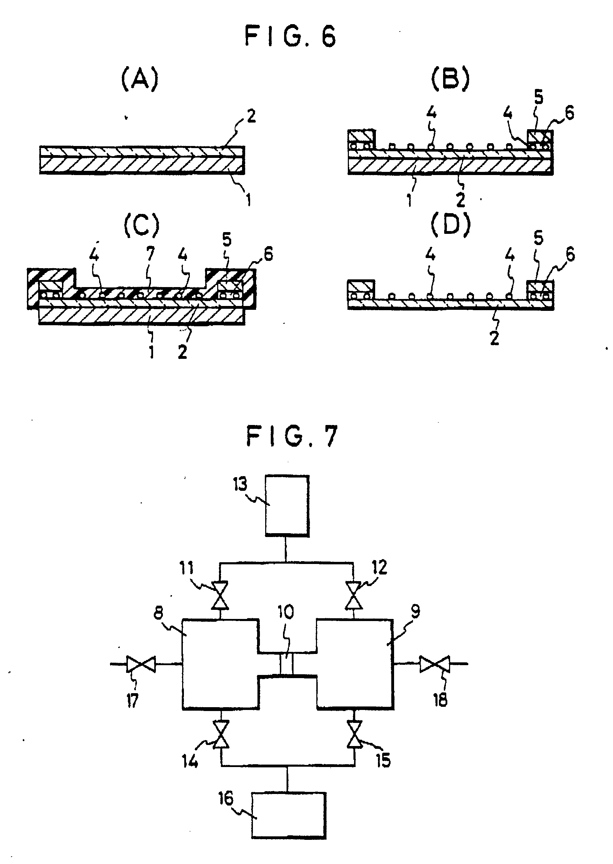

Figs. 6A - 6D are an illustrative diagram showing production steps of another embodiment of the inventive optical window piece. Firstly as shown in Fig. 6A, there is provided a silicon substrate 1 having about 30mm of diameter and about 200μm of thickness. Then, one face of the substrate is deposited or formed with a diamond film 2 having about 2μm of thickness by microwave plasma CVD method according to the synthesis condition represented by the previous table 1.

Next in the step of Fig. 6B, a mesh 4 of carbon fiber having about 7μm of diameter is mounted on the diamond film, and further thereon is bonded a metal window frame 5 having about 30mm of outer diameter, about 20mm of inner diameter and about 2mm of thickness by means of a metal solder 6 so as to fix the carbon fiber mesh 4 onto the one face of the diamond film 2.

3

Then as shown in Fig. 6C, a masking material 7 is coated except the surface of the silicon substrate 1. Further, as shown in Fig. 6D, the substrate 1 is dipped into an acid mixture solution of HF and $HNO_3$ to etch away the silicon substrate. Thereafter, the masking material is also removed and the washing is carried out.

Subsequently, the diamond film 2 is turned up-side-down as shown in Fig. 4, and another carbon fiber mesh 4a is disposed on the other face which is not previously reinforced by the carbon fiber mesh 4. Thereafter, another metal frame 5 is fixed to the other face by means of a metal solder 6. As shown in Fig. 3, by this, there is produced an optical window member having three-layer structure where the diamond film is reinforced by the carbon fiber meshes on both of the front and rear faces.

Fig. 7 is a schematic diagram showing a test apparatus for testing pressure resistance strength of the inventive window piece. A window piece 10 according to the present invention is provided at a-connecting portion between a pair of vacuum chambers 8 and 9 to define a partition. The respective chambers are connected through stop valves 11 and 12 to a gas bottle 13, and are also connected through stop valves 14 and 15 to a vacuum pump 16, and further communicate with atmosphere through leak valves 17 and 18, respectively. By using this test apparatus, the pressure resistance test is undertaken such that the chambers 8 and 9 are differentially vacuumed or pressurized to generate pressure difference between the opposite faces of the diamond film. At pressure difference of 2 atm, there is caused no destruction or leakage of the diamond film, showing the high pressure resistance quality of the inventive window.

As described above, according to the present invention, there is achieved advantages such as scale-up of the optical window piece composed of diamond, and reduction of material and production cost. Further, the diamond film of window is reinforced by the carbon fiber, thereby preventing curvature and undulation of the film and improving pressure resistance strength to avoid destruction. Moreover, the diamond film has good transmittance in wide range wavelength of optical radiation as well s for low energy X-ray.

## Claims

An optical window piece having multi-layer structure comprising:
a film composed of diamond synthesized by gas phase reaction; and
a lattice or network of carbon fiber disposed on the front and/or back faces of the diamond film to reinforce the same.

FIG. 1

FIG. 2

FIG. 3

FIG. 4

FIG. 5

(A)

(B)

(C)

(D)

EP 0 400 655 A1

# FIG. 6

(A)

(B)

(C)

(D)

# FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN, vol. 12, no. 467 (C-550)[3314], 7th December 1988; & JP-A-63 185 892 (RES. DEV. CORP. OF JAPAN) 28-01-1987 | 1 | B 32 B 18/00 |
| A | PATENT ABSTRACTS OF JAPAN, vol. 13, no. 261 (P-885)[3609], 16th June 1989; & JP-A-1 56 401 (IDEMITSU PETROCHEM. CO., LTD) 03-03-1988 | 1 | |
| A | PATENT ABSTRACTS OF JAPAN, vol. 13, no. 175 (P-863)[3523], 25th April 1989; & JP-A-1 9401 (IDEMITSU PETROCHEM. CO., LTD) 12-01-1989 | 1 | |
| A | DE-A-3 612 325 (MITSUBISHI DENKI K.K.) * Claims 1-17 * | 1 | |

TECHNICAL FIELDS SEARCHED (Int. Cl.5)

B 32 B
G 02 B

The present search report has been drawn up for all claims

| Place of search | Date of completion of the search | Examiner |
|---|---|---|
| THE HAGUE | 03-08-1990 | RIGONDAUD B.P.A. |